# EUROPEAN PATENT APPLICATION

(11) **EP 1 780 859 A1**
(43) Date of publication of application: **02.05.2007**
(21) Application number: 05757831.2
(22) Date of filing: 29.06.2005
(51) Int. Cl.: H02J 3/00, C01B 3/32, F02G 5/04, F02M 27/02, F23K 5/08

(54) **ENERGY SUPPLY METHOD AND SYSTEM**

(30) Priority: 02.07.2004 JP 2004197242; 13.04.2005 JP 2005116221
(71) Applicant: JFE Holdings, Inc., Chiyoda-ku, Tokyo 100-0005 (JP)
(72) Inventor: NAKAGAWA, Tsuguhiko, JFE Holdings, Inc., Tokyo 1000005 (JP); TSUYUGUCHI, Tetsuo, JFE Holdings, Inc., Chiyoda-ku, Tokyo 1000005 (JP); OGURA, Yasutsugu, JFE Holdings, Inc., Chiyoda-ku, Tokyo 1000005 (JP)
(74) Representative: HOFFMANN EITLE
(86) International application number: PCT/JP2005/012439
(87) International publication number: WO 2006/004140

(57) **Abstract**

The sensible heat of an exhaust gas of a power generator, a combustion device, or a transport device 21 in a virtual area wherein a plurality of energy-consuming devices 23 are provided (energy supply and demand grid) is recovered as H₂ or CO + H₂ by reforming dimethyl ether (DME); and the H₂ or CO + H₂ is supplied as fuel for the energy-consuming devices 23 or as a chemical raw material within the energy supply and demand grid or to another energy supply and demand grid. By forming an energy cycle in society using DME, for example, waste heat of factories and electric power plants can be effectively utilized as energy in society as a whole, e.g., as energy for consumers or transportation.

## Description

### Technical Field

The present invention relates to a method of supplying energy for supplying energy within a virtual area wherein a plurality of energy-consuming devices are provided (hereinafter referred to as "energy supply and demand grid") and a system therefor.

### Background Art

In Japan, energy consumption by consumers and transportation has been increasing more than energy consumption by industries. One of the reasons for this is a systematic difference in energy use. For example, in factories, elements such as generation (purchase), distribution, and consumption of energy and the entire use of energy have been optimized in the pursuit of economical efficiency. In contrast, in the case of consumers and transportation, energy is used for various segmentized purposes, and the top priority is often given to convenience. Thus, it has been difficult to manage energy using a unified system and to meet excessive energy demand with surplus unutilized energy.

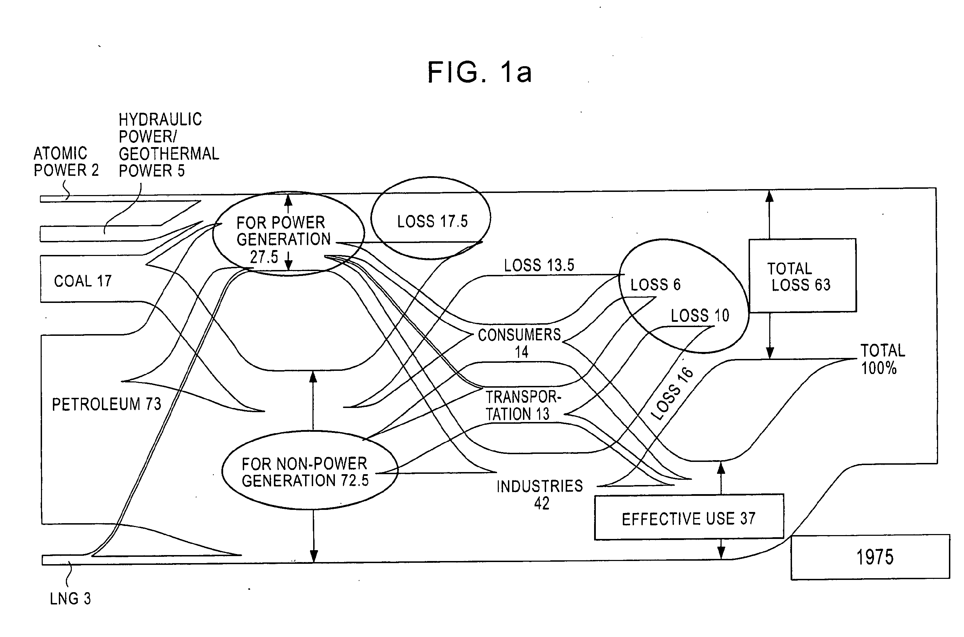

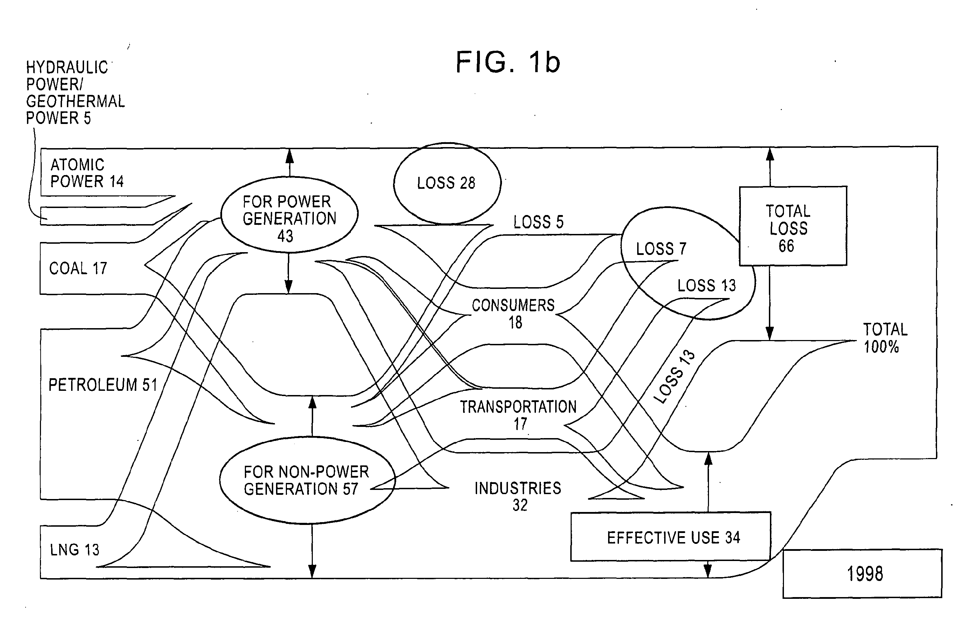

As shown in Fig. 1, the efficiency of energy use of Japan in 1998 is lower than that in 1975 by about 3%. It is believed that the reason for this is that the ratio of energy consumption by power generation, transportation, and consumers to the total energy consumption has increased, and energy loss, for example, due to energy conversion caused by an increase in consumption has increased. Except for industrial use, in which the ratio of energy loss by industrial use to the total energy loss has decreased, the ratio of the energy loss by power generation, transportation, and consumers to the total energy loss has increased from 53% (in 1975) to 73% (in 1998). It is important to develop a system in which unutilized energy for industries and power generation can be effectively utilized as energy for consumers and transportation.

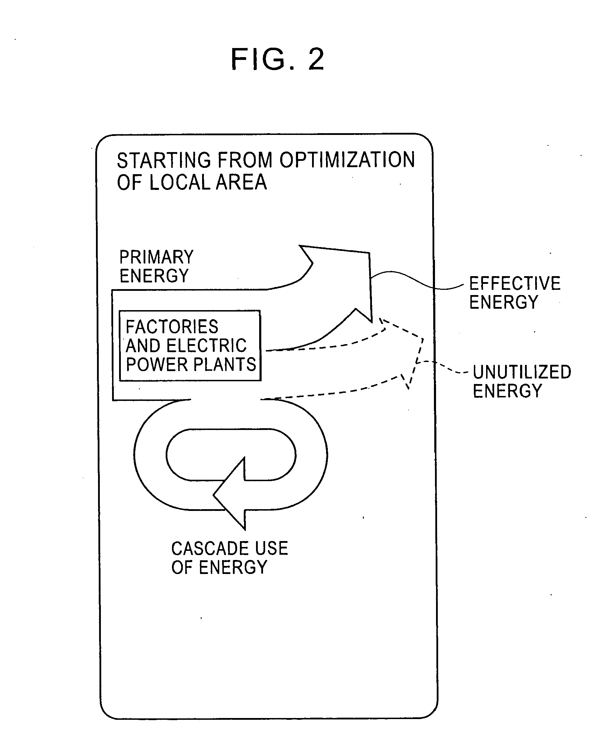

Heretofore, as shown in Fig. 2, in factories and the like, methods of recovering combustion waste heat of a power generator or a heating furnace as the sensible heat of combustion preheated air, steam, hot water, or the like for further utilization have been widely introduced to achieve satisfactory energy savings. In Fig. 1, the fact that the ratio of energy loss by industrial use to the total energy loss is lower than that in other cases is due to the above efforts. It is believed that a similar system must be developed as an energy cycle (interchange) in society as a whole.

Specifically, a system in which unutilized waste heat in factories and electric power plants and energy of waste from consumers and transportation can interchange must be developed in the form of a flow, and more renewable energy sources such as biomass must be used.

### Disclosure of Invention

In order to establish an energy cycle in society, the following problems must be solved. For example, many factories operate day and night, and thus it is relatively easy to effectively utilize recovered sensible heat in such factories. However, when this system is applied to consumers, supply and demand are not balanced. This is caused by an imbalance described below, and even if sensible heat is recovered, it cannot be effectively used in some cases.
(1) Geographical imbalance: The site of supply and the site of demand are far from each other. The sensible heat is dissipated in the course of transportation and has a small energy density. Therefore, an extremely large infrastructure is required in order to transport a large amount of energy, thus causing economical problems.
(2) Temporal imbalance: The temporal fluctuations of supply and demand cannot be matched. For example, during daytime in summer, a large amount of electric power is consumed because of the use of air conditioners and the like, but the use of the sensible heat of hot water and the like is concentrated in the morning and evening and the demand thereof is also small in summer. In order to correct this imbalance, a method of storing sensible heat has been studied, but the storage volume per quantity of sensible heat is larger than that of fuel or the like, thus causing economical problems.
(3) Qualitative imbalance: For example, sensible heat has low energy quality, and it is extremely difficult to use sensible heat as a motive energy source for transportation.

In order to solve these problems, various methods of utilizing sensible heat have been studied to date. However, sensible heat has problems of low energy quality and the application thereof being limited, and these problems have not yet been solved. Therefore, it is believed that the utilization of sensible heat as a medium for an energy cycle is limited.

Consequently, it is a first object of the present invention to provide a method of supplying energy in which an energy cycle can be formed in society using a novel medium for the energy cycle other than sensible heat, and a system therefor.

A known method of supplying electric power is a method in which medium- and small-scale electric power plants, private power generators in apartment complexes and universities, wind power plants, waste power generators where electric power is generated using waste as fuel; and the like are connected in the form of a network, and electric power is supplied from a plurality of power generators (see Japanese Unexamined Patent Application Publication No. 2002-171666).

Fluctuations of electric power consumption in a grid, such as fluctuations in electric power consumption in a grid between day and night, are compensated for by an electric power storage device such as a secondary battery. However, since the electric power storage device is expensive, during a shortage of electric power, the supply of electric power inevitably depends on electric power supplied from another grid or an existing electric power plant. When an electric power shortage occurs in a grid, electric power is supplied from a power generator in another grid to the above grid, thereby compensating for the fluctuation of electric power consumption in the grid.

However, in the above known method of supplying energy, the reliability of fuel supply to a power generator in the case of a disaster, such as an earthquake, is not considered. Since the fuel is transported to the power generator by a pipeline, if the pipeline is disconnected in the occurrence of a disaster, the fuel cannot be supplied to the power generator.

Furthermore, different types of fuel such as propane gas, gasoline, fuel oil, and natural gas in a grid are supplied within the grid according to the individual uses thereof. Therefore, even when the amount of a type of fuel available for supply exceeds the demand, it is difficult to effectively utilize this fuel. For example, fuel oil and kerosene cannot be used for power generators that generate electric power using natural gas as fuel. Therefore, even when the amounts of fuel oil and kerosene available for supply exceed the demand, these substances cannot be effectively utilized as fuel for the power generators.

That is, the known method of supplying energy is an effective technique to some degree from the standpoint that surplus electric power is effectively utilized and the cost of electric power is reduced. However, this method is not a technique developed by combining fuel used for power generation and electric power.

Consequently, it is a second object of the present invention to provide a novel method of supplying energy in which fuel and electric power can be utilized while being associated with each other, and a system therefor.

To achieve the above objects, the present invention provides the following methods for supplying energy and systems therefor.
(1) A method for supplying energy comprising:
   recovering the sensible heat of an exhaust gas of a power generator, a combustion device, or a transport device in a virtual area wherein a plurality of energy-consuming devices are provided (hereinafter referred to as "energy supply and demand grid") as H₂ or CO + H₂ by reforming dimethyl ether (DME) or methanol (CH₃OH) ; and
   supplying the H₂ or CO + H₂ as fuel for the energy-consuming devices or as a chemical raw material within the energy supply and demand grid or to another energy supply and demand grid.
(2) A method for supplying energy comprising:
   providing a base that stores DME or CO + H₂ or H₂ obtained by reforming DME, a power generator that generates electric power using the DME as fuel or using the CO + H₂ or H₂ obtained by reforming DME as fuel, and a combustion device in an energy supply and demand grid;
   supplying electric power generated in the power generator in the energy supply and demand grid to the energy supply and demand grid; and
   supplying the DME or the CO + H₂ or H₂ obtained by reforming DME that is stored in the base in the energy supply and demand grid, as fuel for the power generator in the energy supply and demand grid and as fuel for at least one of the combustion device and a transport device in the energy supply and demand grid.
(3) The method for supplying energy according to item (1) or (2), wherein DME obtained from biomass, waste, petroleum residues, coal bed methane, or coal is supplied to the power generator, the combustion device, or the transport device in the energy supply and demand grid.
(4) The method for supplying energy according to item (1) or (2), wherein electric power generated in a power generator using natural energy derived from sunlight, wind power, or hydraulic power is supplied to the energy supply and demand grid.
(5) The method for supplying energy according to item (1) or (2), wherein a plurality of energy supply and demand grids are interconnected by electric power lines so as to enable interchange of electric power.
(6) The method for supplying energy according to item (1) or (2), wherein energy recovered as CO + H₂ or H₂ in the energy supply and demand grid is continuously supplied by means of a plurality of energy supply and demand grids interconnected with pipelines so as to be capable of interchanging the energy with other energy supply and demand grids.
(7) The method for supplying energy according to item (1) or (2), wherein a supply stand or station is provided inside or outside the energy supply and demand grid to enable supply of the transport device with the energy recovered as CO + H₂ or H₂ in the energy supply and demand grid or DME in a batch so that the energy or DME can be used in the transport device.
(8) An energy supply system, wherein
   waste heat of a power generator, a combustion furnace, a combustion device, or a transport device that is provided in an energy supply and demand grid is subjected to energy conversion to enable supply of the converted energy to energy-consuming devices in the energy supply and demand grid or another energy supply and demand grid;
   the sensible heat of an exhaust gas of the power generator, the combustion device, or the transport device in the energy supply and demand grid is recovered as CO + H₂ or H₂ by reforming dimethyl ether (DME) or methanol (CH₃OH); and
   the CO + H₂ or H₂ is supplied as fuel for the energy-consuming devices or as a chemical raw material within the energy supply and demand grid or to another energy supply and demand grid.
(9) An energy supply system, wherein
   a base that stores DME or CO + H₂ or H₂ obtained by reforming DME, a power generator that generates electric power using the DME as fuel or using the CO + H₂ or H₂ obtained by reforming DME as fuel, and at least one of a combustion device and a transport device are provided in an energy supply and demand grid;
   electric power generated in the power generator in the energy supply and demand grid is supplied to the energy supply and demand grid; and
   the DME or the CO + H₂ or H₂ obtained by reforming DME that is stored in the base in the energy supply and demand grid is supplied as fuel for the power generator in the energy supply and demand grid and as fuel for at least one of the combustion device and the transport device in the energy supply and demand grid.

According to the invention described in item (1), by forming an energy cycle in society using DME, for example, waste heat of factories and electric power plants can be effectively utilized as energy in society as a whole, e.g., as energy for consumers or transportation.

According to the invention described in item (2), since dimethyl ether (DME), which is versatile, is used as fuel for a power generator and fuel for at least one of a combustion device and a transport device, the possibility of interchange of fuel can be increased between devices in a grid. Furthermore, energy can be supplied without developing a special supply infrastructure such as a pipeline, and thus an economical method of supplying energy can be provided. For example, existing electric power lines can be used for providing electric power, and it is sufficient that a storage tank is present in a grid for fuel supply. In particular, existing facilities for storing propane can be used as facilities for storing DME with a simple remodeling. Furthermore, each of the grids is not connected to a pipeline, and is an independent system. Consequently, damage can be reduced in the case of the occurrence of a disaster such as an earthquake, and the recovery is also easy when the system suffers from a disaster.

According to the invention described in item (3), the use of waste and the like can be expanded, and CO₂ emission caused by combusting waste and the like can be reduced.

According to the invention described in item (4), the use of natural energy can be expanded.

According to the invention described in item (5), surplus electric power in an energy supply and demand grid can be supplied to another energy supply and demand grid.

According to the invention described in item (6), surplus CO + H₂ or H₂ fuel in an energy supply and demand grid can be supplied to another energy supply and demand grid.

According to the invention described in item (7), waste heat of factories and electric power plants can be used in transport devices through energy conversion.

According to the invention described in item (8), by forming an energy cycle in society using DME, for example, waste heat of factories and electric power plants can be effectively utilized as energy in society as a whole, for example, as energy for consumers or transportation.

According to the invention described in item (9), since dimethyl ether (DME), which is versatile, is used as fuel for a power generator and fuel for at least one of a combustion device and a transport device, the possibility of interchange of fuel can be increased between devices in a grid.

### Brief Description of the Drawings

Fig. 1 is a diagram showing the energy efficiency in Japan.
Fig. 2 is a flow diagram showing an energy cycle in a factory and the like.
Fig. 3 is a diagram showing the energy balance of DME before and after conversion.
Fig. 4 is a graph showing the equilibrium conversion rate of various types of fuel used to produce hydrogen.
Fig. 5 is a diagram showing a waste heat recovery apparatus.
Fig. 6 is a view showing an example of a tubular heat exchanger 2.
Fig. 7 is a diagram showing another example of a waste heat recovery apparatus.
Fig. 8 is a schematic diagram showing an energy cycle in society.
Fig. 9 is a diagram showing an example of an energy supply and demand grid in a steel mill or a large-scale factory.
Fig. 10 is a diagram showing an example of an energy supply and demand grid in a university or the like.
Fig. 11 is a diagram showing an embodiment in which a plurality of energy supply and demand grids are connected by electric power lines and pipelines to form a network.
Fig. 12 is a diagram showing an energy supply system according to a second embodiment of the present invention.

### Best Mode for Carrying Out the Invention

In the present invention, DME is used as a novel medium for the energy cycle other than sensible heat. The reasons for the use of DME will now be sequentially described from the following viewpoints: 1. Medium that enables establishment of an energy cycle in society and 2. Energy supply system using DME.

### 1. Medium that enables establishment of an energy cycle in society

In order to correct the imbalance between supply and demand, which is an obstacle in the formation of an energy cycle in society, a novel medium for the energy cycle other than sensible heat must be considered. It is believed that the following characteristics are required for the novel medium for the energy cycle.
(1) The medium has a high level of safety and the same economical efficiency as that of existing fuel.
   Regarding safety, the substance itself serving as the medium must be nontoxic, and preferably, even after being combusted, does not result in the discharge of SOₓ, NOₓ, and particulate substances.
(2) The waste heat of the medium can be recovered as general-purpose energy.
   Preferably, the energy to be recovered has a high exergy value and can be recovered as fuel in which the supply and demand of the energy can be adjusted.
(3) The medium can be produced from renewable energy such as biomass or waste.
   It is necessary that such a medium can contribute to the reduction in CO₂ emission by combustion by increasing the use of biomass, waste, or the like, and the adaptation thereof to energy reliability in the future can be promoted.
(4) The medium can be used as fuel, and is effective for meeting environmental measures adopted in various heating furnaces, internal combustion engines, and the like.
   Meeting of the environmental measures is essential when the medium is used in an urban area, and wide application is important in order to ensure economical efficiency thereof.
(5) The use of the medium does not result in a dual investment in the development of a social infrastructure in the future.

In consideration of the consistency of the administrative policy, it is believed that two standpoints, namely, adjusting to the change in energy demand in the future and being suitable in meeting disaster measures, are important.

From the former standpoint, the medium can be used as fuel for a fuel cell, i.e., used as a general-purpose medium for hydrogen generation, the demand of which is expected to increase in the future. It is necessary to provide an effect of CO₂ reduction, for example, the recycling of CO₂ as fuel, even if the demand for hydrogen does not increase as expected.

From the latter standpoint, for example, in the Great Hanshin-Awaji Earthquake, the lives of many people who could have been saved were lost because of the disruption of lifelines. Even when fuel piping, power transmission lines, and the like are disrupted by an earthquake or the like, a system that can independently ensure the required amount of minimum energy must be developed, and the medium must be usable in the system. It is believed that DME is a promising substance that satisfies the above conditions.

### 1-1. Characteristics of DME

DME, which has a chemical structure of CH₃OCH₃ and is a colorless flammable gas at room temperature and under atmospheric pressure, has the following characteristics.
(1) DME is liquefied at -25°C under atmospheric pressure, and under a pressure of 0.6 MPa at room temperature (25°C). Therefore, DME can be stored and transported in the form of a liquid as in liquefied petroleum gas (LPG) that is easily liquefied and has excellent handleability. Thus, the infrastructure for LPG can be used for the distribution of DME. Furthermore, DME can be used as either gas fuel or liquid fuel.
(2) The cetane number of DME is higher than that of light oil, and DME can be used as fuel for a diesel engine, which is an internal combustion engine with a high efficiency.
(3) The explosion limit of DME is the same as that of propane gas or methane, and the risk of explosion of DME is lower than that of methanol or light oil.
(4) Since DME decomposes in the atmosphere within several tens of hours to H₂O and CO₂, DME does not cause ozone layer depletion.
(5) Since DME does not contain sulfur, SO_{X} is not produced during combustion.
(6) Since DME does not have a direct bond of carbons in terms of chemical structure, particulate matter (PM) and soot are not produced.
(7) DME can be converted to hydrogen at a low temperature of about 300°C.
(8) DME is now primarily used as a spraying agent for sprays and is a nontoxic substance with a high level of safety.

On the other hand, regarding the shortcomings of DME, since the lubricity is lower than that of light oil, a lubricity modifier must be added thereto. In addition, DME may cause swelling in rubber and plastics. Developments have been made in solving these problems and have been reached a level in which such problems do not occur in practical applications.

### 1-2. DME as a medium for an energy cycle

DME is superior to other types of fuel as a medium for an energy cycle in terms of the following points.
(1) Versatility as a medium for energy distribution
   DME is converted to hydrogen by an endothermic reaction represented by formula (1).

   CH₃OCH₃ + 3H₂O + 121 kJ/mol → 6H₂ + 2CO₂ (1)

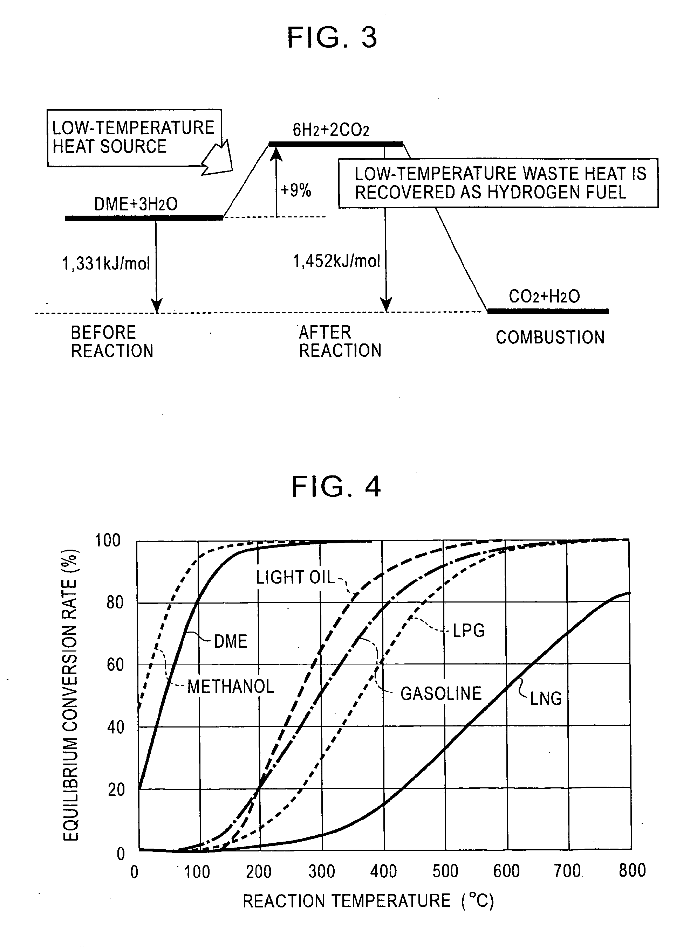

   The energy balance of DME before and after conversion is shown in Fig. 3, and the waste heat can be recovered as combustion heat of hydrogen.
   Fig. 4 shows the equilibrium conversion rate of various types of fuel used to produce hydrogen.
   Referring to Figs. 3 and 4, the conversion reaction of DME to produce hydrogen is carried out at a temperature of about 300°C in the presence of an appropriate catalyst. In contrast, the reaction temperature at which other types of fuel are converted to hydrogen is high, and it is difficult to effectively recover the combustion waste heat at medium to low temperatures.
   Waste heat in the range of 300°C to 400°C is discharged as, for example, waste heat of a combustion gas from electric power plants or factories. When such waste heat is recovered using DME as hydrogen fuel instead of steam or hot water, waste heat from the factories or electric power plants can be utilized as energy for consumers, commerce, or transportation as fuel cells using hydrogen are widely used.
   DME also converts CO₂ to a mixed gas of CO and H₂ by an endothermic reaction represented by formula (2). When CO₂ with a purity of 100% is used, a mixed gas having a lower heat value of 11,700 kJ/Nm³ is obtained and can be used as fuel for industrial use.

   CH₃OCH₃ + CO₂ + 243 kJ/mol → 3H₂ + 3CO (2)

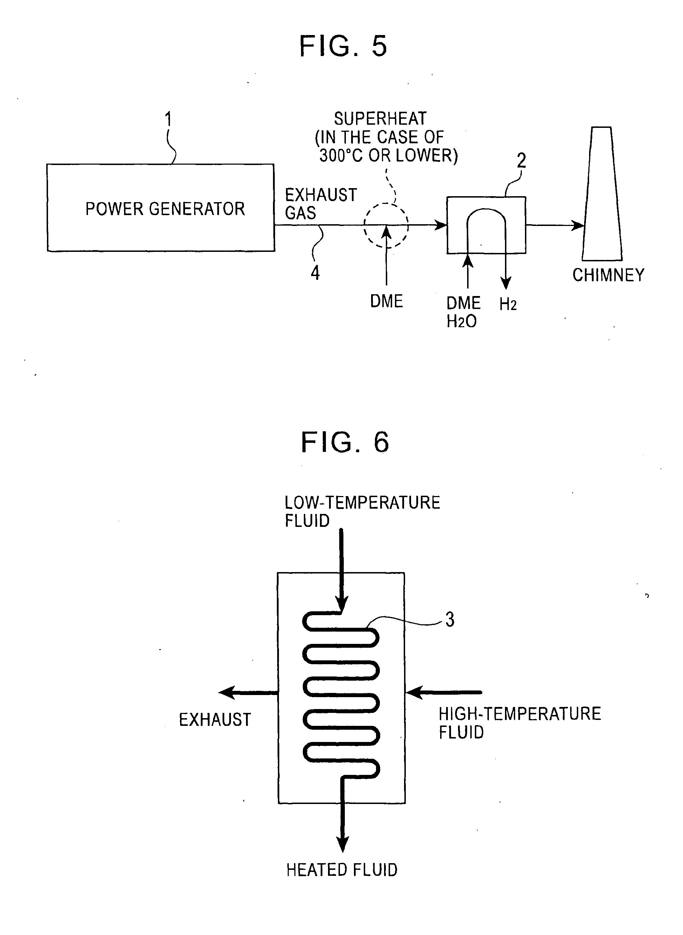

   It is believed that the reaction represented by formula (2) can be carried out at about 300°C in the presence of an appropriate catalyst as in the reaction represented by formula (1). When this reaction is utilized, CO₂ can be recycled as fuel.
(2) Suitability as fuel for a diesel engine
   According to the combustion characteristic of DME, the emission of environmental pollutants such as NO_{X}, SO_{X}, and particulate matter can be markedly reduced. When DME was previously used as fuel for a diesel engine of a truck with a gross vehicle weight of 8 t, it was demonstrated that the new short-term regulation amounts of N_{X}, CO, hydrocarbons (HC), and.PM determined in the fiscal year of 2003 to 2004 were markedly reduced without using a diesel particulate filter (DPF). In addition, the output and the torque of this diesel engine were higher than those of a similar type diesel engine using light oil, and the same cruising distance could be achieved.
(3) Effective use of biomass or general waste
   Since DME can be synthesized from CO and H₂, DME can be produced by gasifying biomass or general waste. By converting biomass or waste to DME, the biomass or the waste can be utilized as fuel that can be easily distributed and stored, while meeting the demand.
(4) Utilization in disaster measures: In urban areas, it is advantageous to utilize DME that is excellent in terms of meeting environmental measures and that can be easily handled as described in item (2) of this section. Furthermore, from the standpoint of the adaptation to energy demand in the future, the characteristics of DME described in item (1) of this section are very useful.
   In particular, the characteristics described in item (1) lead to popularization of fuel cells and pave the way for utilizing waste heat from factories or electric power plants as energy for consumers and transportation. In addition, according to items (2) to (4), DME is suitable fuel for meeting environmental and disaster measures.
(5) Specific waste heat recovery apparatus: Fig. 5 shows a waste heat recovery apparatus for recovering sensible heat of an exhaust gas of a power generator 1 that generates waste heat as H₂. A heat exchanger 2 is provided in an exhaust system 4 of the power generator 1, and a mixed gas of DME and H₂O (water vapor) is supplied to the heat exchanger 2. By performing heat exchange between the waste gas and DME in the heat exchanger 2, the DME is pyrolyzed to H₂ and the sensible heat of the exhaust gas is recovered as H₂ fuel.

Various types of heat exchanger such as tubular type, plate type, extended heat transfer surface type, regenerative type, fluidized bed type, and heating medium circulating type can be used as the heat exchanger 2. Fig. 6 shows an example of a tubular heat exchanger 2 (recovery heat exchanger called recuperator). In the recuperator, an exhaust gas and a mixed gas of DME and H₂O are separated by a heat transfer tube 3 serving as a solid wall. The mixed gas of DME and H₂O, which is a low-temperature fluid, flows inside the heat transfer tube 3, and the exhaust gas, which is a high-temperature fluid, flows outside the heat transfer tube 3. Heat exchange is performed by indirectly bringing the mixed gas into contact with the exhaust gas. The sensible heat of the exhaust gas is transferred to the mixed gas of DME and H₂O via the heat transfer tube 3 by radiation and conduction. A catalyst, such as alumina, silica, or titania, used for reforming DME to produce hydrogen is filled in the side of the heat exchanger 2 to which the mixed gas of DME and H₂O is supplied. The reaction of CH₃OCH₃ + 3H₂O + 121 kJ/mol → 6H₂ + 2CO₂ is carried out by the catalyst. By this reaction, DME is pyrolyzed to H₂, and the sensible heat of the exhaust gas can be recovered as H₂ fuel. In the above case, when the temperature of the exhaust gas is low (e.g. 300°C or lower), the reaction in which the mixed gas of DME and H₂O is decomposed to H₂ does not easily occur.' Consequently, as shown in Fig. 5, a part of DME used for heat recovery is fed to the exhaust system (so-called superheat) so that the quantity of heat of the exhaust gas is increased (for example, the temperature of the exhaust gas is increased to 300°C or higher). Thus, the exhaust gas may be heated by the combustion heat of the fed DME. When the temperature of the exhaust gas is in the range of 350°C to 400°C, the reaction in which the mixed gas of DME and H₂O is decomposed to H₂ is carried out. Therefore, in such a case, DME need not be superheated. In addition, the use of a heat exchanger having high efficiency enables DME to be pyrolyzed even at an exhaust gas temperature of 300°C or lower.

Instead of supplying the mixed gas of DME and H₂O to the heat exchanger 2, a mixed gas of DME and CO₂ may be supplied to the heat exchanger 2, thereby pyrolyzing the DME to H₂ and CO. Thus, the sensible heat of the exhaust gas of a combustion furnace may be recovered as H₂ and CO fuel. In this case, in the heat exchanger 2, the reaction of CH₃OCH₃ + CO₂ + 243 kJ/mol → 3H₂ + 3CO is carried out. When the resulting H₂ and CO fuel is mixed with a by-product gas of a steel mill, the amount of generation of by-product gas can be stabilized.

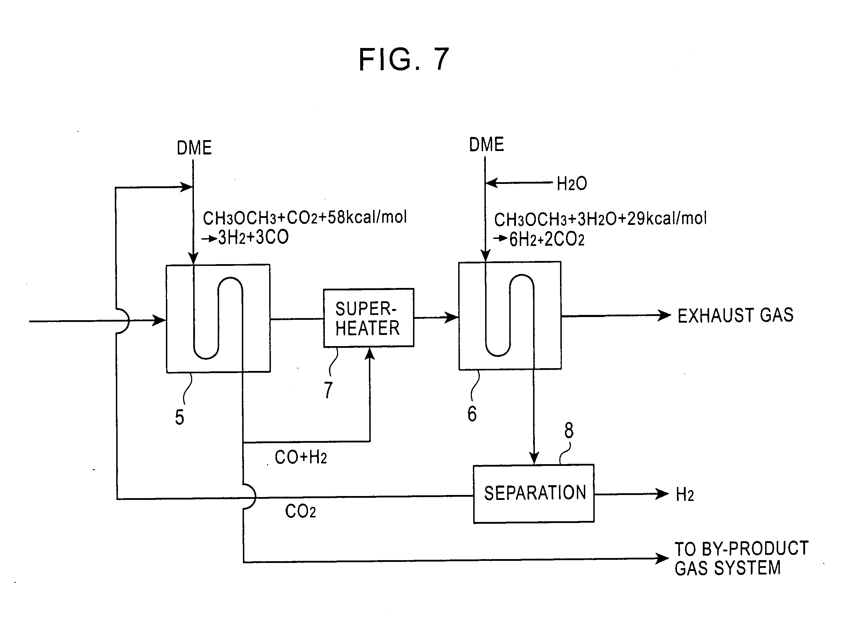

Fig. 7 shows another example of a waste heat recovery apparatus. In the waste heat recovery apparatus of this example, a first heat exchanger 5 for recovering DME as H₂ and CO fuel is disposed at the upstream side of an exhaust system of a power generator or the like, and a second heat exchanger 6 for recovering DME as H₂ fuel is disposed at the downstream side thereof. As described above, the heat of reaction in the endothermic reaction in the first heat exchanger 5 is larger than that in the second heat exchanger 6. In order to smoothly carry out these endothermic reactions, preferably, the first heat exchanger 5 and the second heat exchanger 6 are disposed in tandem, and the first heat exchanger 5 is disposed at the upstream side and the second heat exchanger 6 is disposed at the downstream side.

A catalyst used for reforming DME to produce the H₂ and CO fuel is filled in the first heat exchanger 5. A gas prepared by mixing DME with CO₂ is fed to the first heat exchanger 5. In the first heat exchanger 5, the sensible heat of the exhaust gas is recovered as the H₂ and CO fuel. The recovered H₂ and CO fuel is then supplied to, for example, a by-product gas system in a steel mill or the like. In order to increase the temperature of the exhaust gas fed to the second heat exchanger 6, a part of the DME may be fed to the exhaust system between the first heat exchanger 5 and the second heat exchanger 6 and may be combusted (i.e., superheated).

A catalyst used for reforming DME to produce the H₂ fuel is filled in the second heat exchanger 6. A mixed gas of DME and H₂O is fed to the second heat exchanger 6. In the second heat exchanger 6, the sensible heat of the exhaust gas is recovered as the H₂ fuel. CO₂ discharged from the second heat exchanger 6 together with the H₂ fuel is separated in a separating unit 8. The separated CO₂ is supplied to the first heat exchanger 5 as a raw material. Since the concentration of the separated CO₂ is high, a gas other than the CO₂ need not be heated in the first heat exchanger 5, and thus the decomposition reaction of DME can be efficiently performed.

### 2. Energy supply system using DME.

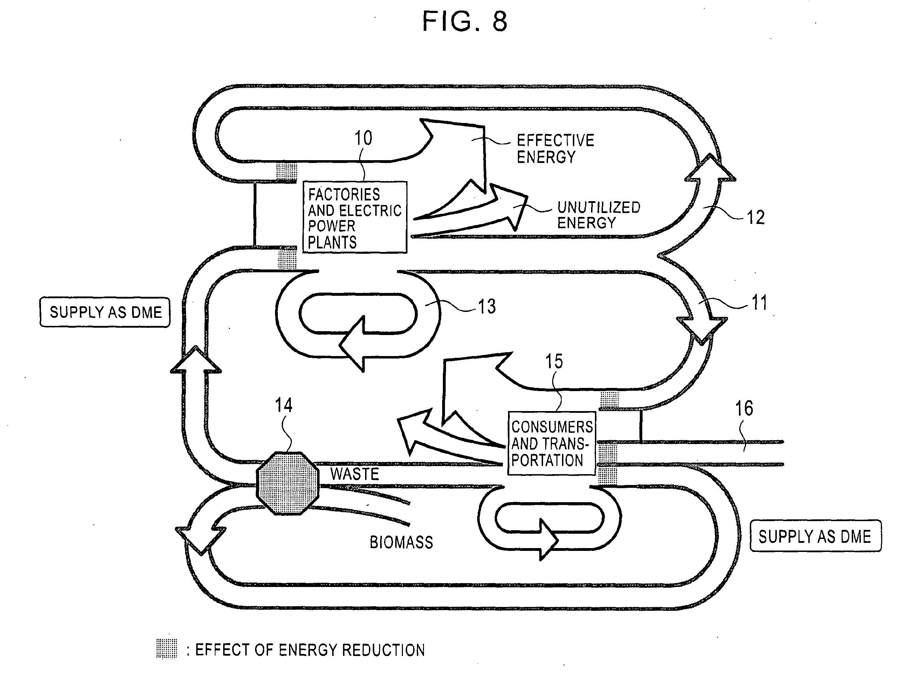

Accordingly, it is believed that an energy cycle in society, shown in Fig. 8, can be constructed using DME. In Fig. 8, unutilized waste heat in factories and electric power plants 10 and energy of waste generated from consumers and transportation 15 are interchanged.

The unutilized waste heat of power generators and heating furnaces in factories and electric power plants 10 is recovered as H₂ or CO + H₂ by reforming DME. The recovered H₂ is supplied to fuel cell vehicles utilized by the consumers and transportation 15 as fuel (pathway 11) or supplied to the factories and electric power plants 10 as a chemical raw material. On the other hand, the recovered CO + H₂ is supplied to heating furnaces in the factories and electric power plants 10 as fuel (pathway 12) or supplied to combustion devices utilized by the consumers and transportation 15. In the factories and electric power plants 10, a known energy cycle is also performed in which unutilized waste heat of power generators and heating furnaces is recovered as the sensible heat of combustion preheated air, steam, hot water, or the like (pathway 13).

Although energy is primarily consumed by the consumers and transportation 15, a large amount of renewable energy is generated as waste from the consumers and transportation 15. Hitherto, it has been difficult to use such waste as fuel. Therefore, the waste is gasified in a gasifier to CO + H₂, and is then converted to DME through energy conversion by a known DME synthetic reaction (plant 14). DME may be produced from biomass, petroleum residues, coal bed methane, or coal instead of waste. When DME derived from waste or the like is mixed with DME derived from natural gas and supplied to the factories and electric power plants 10 and the consumers and transportation 15, renewable energy such as that obtained from waste can be reused in society as a whole and the utilization of waste and the like can be expanded. Furthermore, electric power generated in a power generator that uses natural energy derived from sunlight, wind power, or hydraulic power may be supplied to the consumers and transportation 15 (pathway 16). Fluctuations of the electric power generated by the natural energy are compensated for by DME power generation.

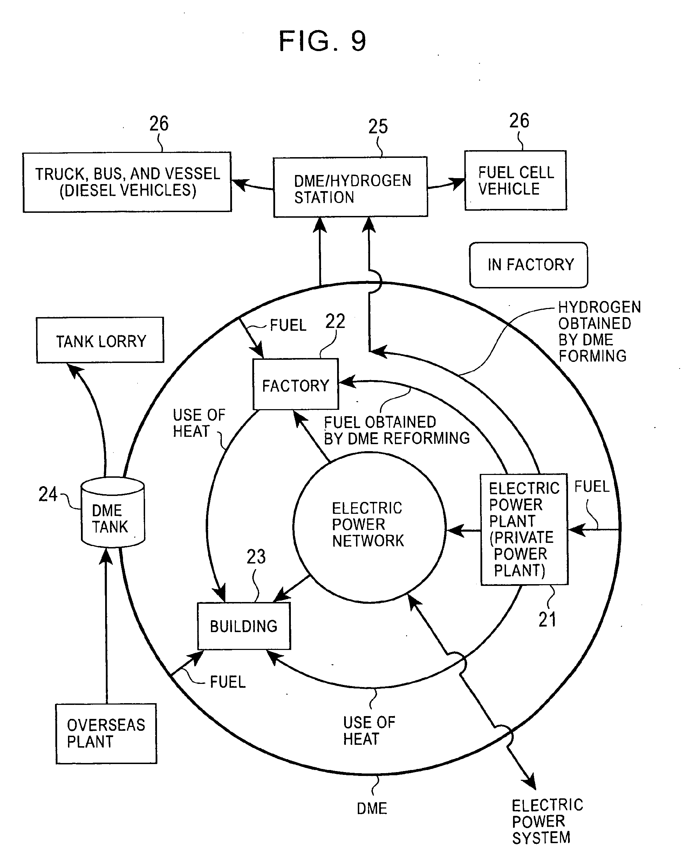

Examples of specific energy supply systems for realizing the energy cycle shown in Fig. 8 include energy supply systems using energy supply and demand grids shown in Figs. 9 to 11. Various forms of energy supply and demand grid are present in accordance with the way of use of energy.

Fig. 9 shows an example of an energy supply and demand grid in a steel mill or a large-scale factory. In the energy supply and demand grid, an electric power plant (private power plant) 21 such as a gas engine or a diesel engine is provided as a power generator, and a heating furnace in a factory 22 is provided as an energy-consuming device. Transport devices 23, such as a truck, a bus, a vessel, and a fuel cell vehicle, are present as energy-consuming devices outside the energy supply and demand grid.

Furthermore, in this energy supply and demand grid, a DME tank 24 is provided as a primary base where DME produced in an oversea plant is stored, and liquefied DME is stored in the DME tank 24. The DME is supplied to, for example, a building 23, the factory 22, and the electric power plant 21 in the grid as fuel, and is supplied to a DME/hydrogen station adjacent to the factory as fuel for the transport devices 23.

The electric power plant 21 converts chemical energy to electric energy using DME or fossil fuel as fuel. The electric power generated in the electric power plant 21 is supplied to the factory 22, the building 23, and the like through an electric power network. The above-described heat exchanger is provided in an exhaust system of the electric power plant 21. DME serving as a reforming medium is fed to the heat exchanger, thereby pyrolyzing the DME and recovering it as H₂ or CO + H₂. The recovered H₂ is supplied to the DME/hydrogen station 25. Thus, a station functioning as both a DME station and a hydrogen station can be constructed. In the DME/hydrogen station 25, DME is supplied in a batch as fuel for large diesel vehicles 26 such as a truck and a bus, while hydrogen is supplied in a batch to a fuel cell vehicle 26. Furthermore, in the DME/hydrogen station 25, DME is supplied to a fuel cell vehicle equipped with a reformer, whereas hydrogen is supplied to a fuel cell vehicle that is not equipped with a reformer. Accordingly, fuel can be supplied to either type of fuel cell vehicle. On the other hand, the recovered CO + H₂ is supplied to the heating furnace in the factory 22.

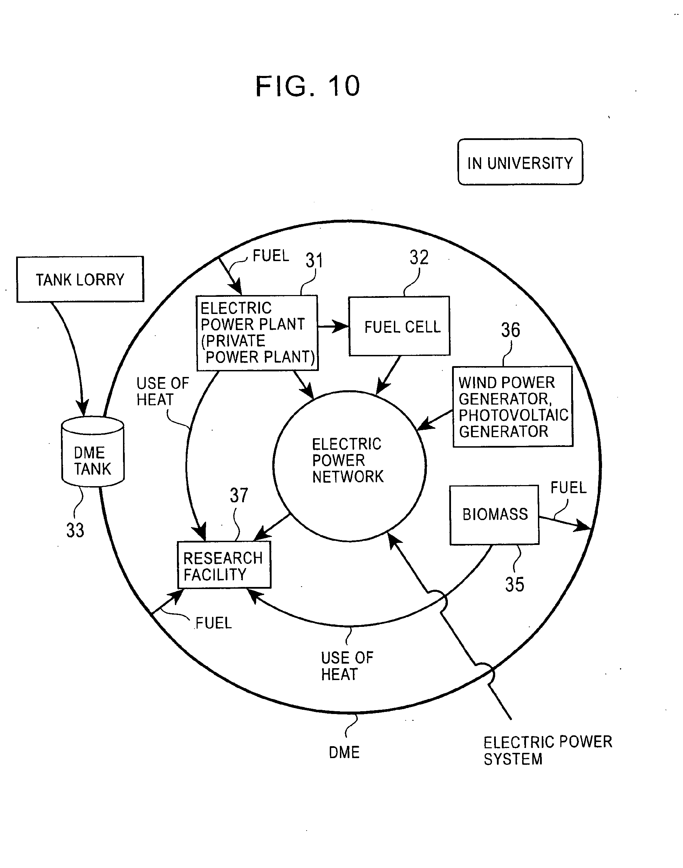

Fig. 10 shows an example of an energy supply and demand grid in a university or the like. In this energy supply and demand grid, an electric power plant (private power plant) 31 such as a gas engine or a diesel engine is provided as a power generator, and a fuel cell 32 is provided as an energy-consuming device.

In the energy supply and demand grid, a DME tank 33 is provided as a secondary base where DME is transported from a primary base that stores DME, and liquefied DME is stored in the DME tank 33. The DME is supplied to, for example, a research facility 37 and the electric power plant 31 in the grid as fuel.

The electric power plant 31 converts chemical energy to electric energy using DME or fossil fuel as fuel. The electric power generated in the electric power plant 31 is supplied to the research facility 37 and the like through an electric power network 34. The above-described heat exchanger is provided in an exhaust system of the electric power plant 31. DME serving as a reforming medium is fed to the heat exchanger, thereby recovering the DME as H₂ or CO + H₂. The recovered H₂ is supplied to the fuel cell 32. The electric power generated from the fuel cell 32 is supplied to the electric power network 34.

In the grid, a plant facility 35 may be provided in which biomass, waste, petroleum residues, coal bed methane, or coal is gasified to synthesize DME. The produced DME is supplied as fuel in the grid, and the produced thermal energy is supplied to the research facility 37. Furthermore, a power generator 36 using natural energy derived from sunlight, wind power, or hydraulic power may be provided in the grid. The electric power generated in the power generator 36 using natural energy is supplied to the electric power network 34.

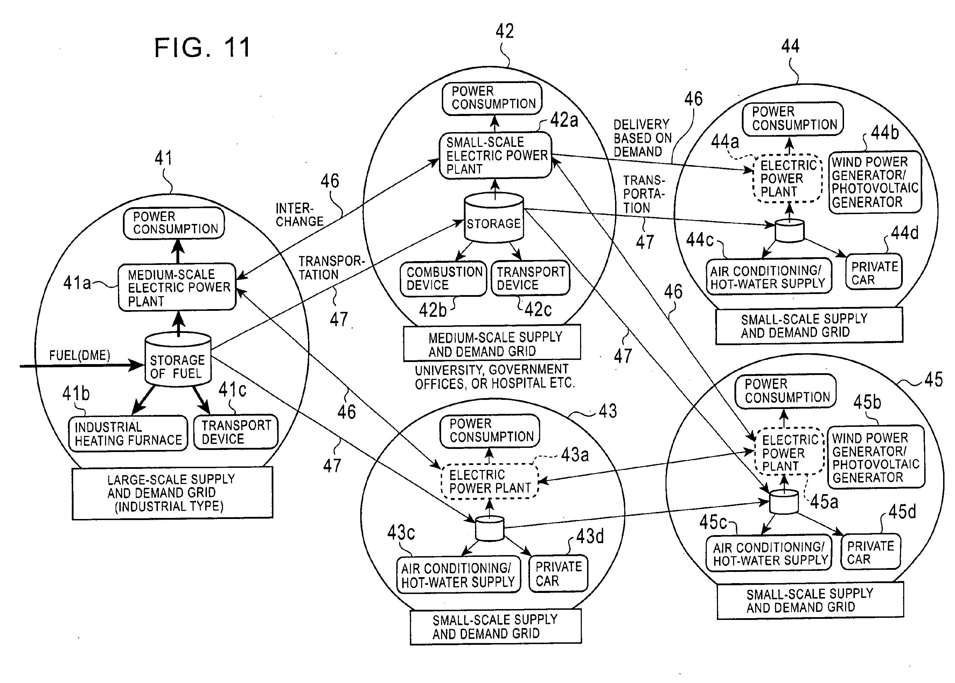

Fig. 11 shows an embodiment in which a plurality of energy supply and demand grids 41 to 45 are connected by electric power lines 46 and pipelines 47 to form a network. In this embodiment, a large-scale supply and demand grid 41 such as a steel mill or a large-scale factory; a medium-scale supply and demand grid 42 such as a university, government offices, or a hospital; and small-scale supply and demand grids 43, 44, and 45 such as a hotel, a condominium, or a shopping center are connected by the electric power lines 46 and the pipelines 47 to form a network. In the large-scale supply and demand grid 41, an electric power plant 41a that generates electric power using DME as fuel is provided, and an industrial heating furnace 41b and a transport device 41c are provided as energy-consuming devices. In the medium-scale supply and demand grid 42, an electric power plant 42a that generates electric power using DME as fuel is provided, and a combustion device 42b and a transport device 42c are provided as energy-consuming devices. In the small-scale supply and demand grids 43, 44, and 45, private power plants 43a, 44a, and 45a, or power generators 44b and 45b using natural energy are provided as required, and air conditioning or hot-water supply apparatuses 43c, 44c, and 45c, and private cars 43d, 44d, and 45d are provided as energy-consuming devices.

In the medium- and small-scale supply and demand grids 42 to 45, since energy is consumed in the combustion device 42b, air conditioning or hot-water supply apparatuses 43c to 45c, the private cars 43d to 45d, and the like, these grids consume energy rather than generate energy. Even if there is some energy generation, a small amount of waste heat is generated from an exhaust system of the private power plants 42a to 45a at best. In such a case, even when H₂ or CO + H₂ is recovered from the waste heat, only a small amount can be used as fuel for fuel cells in the grids at best. In order to establish an energy cycle for the whole society, a system in which surplus electric power or DME fuel in the large-scale supply and demand grid 41, such as a steel mill or a large-scale factory, is transported to the medium- and small-scale supply and demand grids 42 to 45 is required. Therefore, in this embodiment, a plurality of energy supply and demand grids 41 to 45 are interconnected by the electric power lines 46 so that the plurality of energy supply and demand grids 41 to 45 can form a network, that is, the grids 41 to 45 can interchange electric power. In addition, the plurality of energy supply and demand grids 41 to 45 are interconnected by the pipelines 47 and energy is continuously supplied so that the energy recovered as CO + H₂ or H₂ in one of the energy supply and demand grids 41 to 45 can be interchanged in other energy supply and demand grids 41 to 45.

When the power generator provided in the medium- and small-scale supply and demand grids 42 to 45 has a capacity of producing surplus electric power and, on the other hand, when electric power is temporally insufficient (for example, during daytime) in the large-scale supply and demand grid 41, the electric power may be supplied from the medium- and small-scale supply and demand grids 42 to 45 to the large-scale supply and demand grid 41. In particular, when the power generators 44b and 45b that generate electric power using natural energy derived from sunlight, wind power, or hydraulic power is provided in the medium- and small-scale supply and demand grids 42 to 45, a capacity of producing surplus electric power is temporally generated in the power generators 44b and 45b. As described above, when the energy supply and demand grids form a network, electric power and fuel can be interchanged between the grids.

In the present embodiment, various modifications may be made without departing from the essence of the present invention. The energy supply and demand grids are not limited to the above embodiment, and various modifications may be made in accordance with the form of energy supply and the energy-consuming devices. For example, instead of the power generator, a combustion device or a transport device may be provided in the energy supply and demand grids as long as the device discharges waste heat from its exhaust system. When electric power and fuel are not interchanged, a plurality of energy supply and demand grids need not be interconnected by electric power lines and pipelines. Furthermore, instead of DME, CH₃OH may be used as the reforming medium. CH₃OH is reformed to produce CO + H₂ or H₂ by reactions represented by the following formulae.

CH₃OH + H₂O → 3H₂ + CO₂

CH₃OH → 4H₂ + 2CO

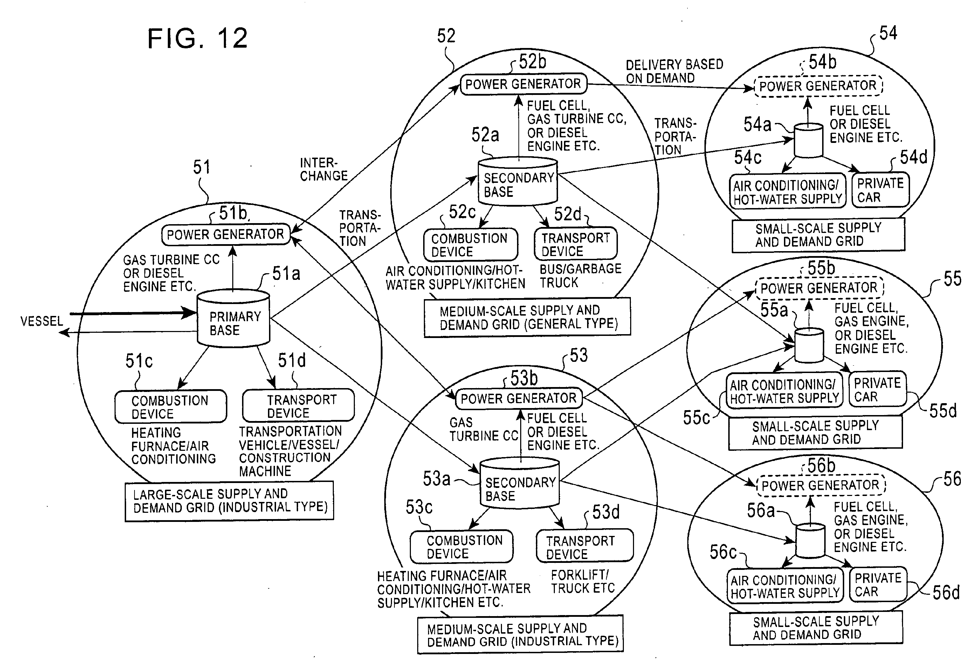

An energy supply system according to a second embodiment of the present invention will now be described with reference to Fig. 12. The energy supply system is composed of a plurality of energy supply and demand grids 51 to 56. As in the energy supply and demand grids shown in the above-described figure, the energy supply and demand grids 51 to 56 include large-, medium-, and small-scale energy supply and demand grids, and a power generator and an energy-consuming device are provided in each energy supply and demand grid. Each of the energy supply and demand grids 51 to 56 is also a regional area or a virtual area for use by only local affiliates of the grid. Unlike the regional area, which is a physical area located within a certain range, the virtual area means a state in which distant affiliates in different areas are systematically connected to each other.

The energy supply and demand grids 51 to 56 include bases 51a to 56a that store DME and power generators 51b to 56b that generate electric power using the DME as fuel, respectively. The electric power generated in the power generators 51b to 56b of the energy supply and demand grids 51 to 56 is supplied to the affiliates of the energy supply and demand grids 51 to 56. The DME stored in the bases of the energy supply and demand grids 51 to 56 is supplied as fuel for the power generators 51b to 56b, combustion devices 51c to 56c, and transport devices 51d to 56d in the energy supply and demand grids 51 to 56.

The plurality of energy supply and demand grids 51 to 56 are divided into a large-scale supply and demand grid 51, medium-scale supply and demand grids 52 and 53, and small-scale supply and demand grids 54 to 56 in accordance with the power generation scale.

The large-scale supply and demand grid 51 is, for example, a steel mill or a large-scale factory, and includes a primary base 51a that stores DME, the power generator 51b that generates electric power using the DME as fuel, and the combustion device 51c and the transport device 51d that use the DME as fuel. DME is transported to the primary base 51a by a vessel or the like, and liquefied DME is stored in tanks of the bases 51a to 56a.

For example, a gas turbine or a diesel engine is used as the power generator 51b, and a combustion furnace or an air conditioning apparatus is used as the combustion device 51c. For example, a transportation vehicle, a vessel, or a construction machine is used as the transport device 51d. Regarding the proportion of the use of DME, for example, about 60% of DME is used in the power generator 51b, about 30% of DME is used in the combustion device 51c, and about 10% of DME is used in the transport device 51d. In this case, all the combustion device 51 and the transport device 51d need not use DME as fuel, and some of the devices may use DME as fuel.

The medium-scale supply and demand grids 52 and 53 are added like satellites around the large-scale supply and demand grid 51. In the establishment of the medium-scale supply and demand grids 52 and 53, infrastructures such as pipelines and electric power lines need not be newly developed because it is sufficient that, for example, existing electric power lines are used and tanks for storing DME are provided.

The medium-scale supply and demand grids 52 and 53 are, for example, a medium- or small-scale factory, a university, or a government office, and include secondary bases 52a and 53a respectively, that store DME.

In the medium-scale supply and demand grid 53 composed of a medium- or small-scale factory, since the consumption of electric power in the grid 53 is smaller than that in a large-scale factory, a fuel cell, a diesel engine, or the like may be used as the power generator 53b instead of a gas turbine. For example, an apparatus for air conditioning, hot-water supply, or a kitchen is used as the combustion device 53c instead of a heating furnace. For example, a forklift or a truck is used as the transport device 53d. As the scale is shifted from the large-scale to the medium-scale, the application of the devices in the grid is changed.

In the medium-scale supply and demand grid 52 composed of a university or a government office, the DME consumption in the power generator 52b and the combustion device 52c used for air-conditioning, hot-water supply, or a kitchen is increased, and the DME consumption in the transport device 52d is decreased. A bus, a garbage truck (waste-collecting vehicle), or the like is used as the transport device 52d.

The small-scale supply and demand grids 54 to 56 are also added like satellites around the medium-scale supply and demand grids 52 and 53. In the establishment of the small-scale supply and demand grids 54 to 56, infrastructures such as pipelines and electric power lines need not be newly developed.

The small-scale supply and demand grids 54 to 56 are, for example, a hotel, a condominium, an apartment complex, or a shopping center, and include the tertiary base 54a that stores DME. For example, a fuel cell, a diesel engine, or a gas engine is used as the private power generators 54b to 56b of the small-scale supply and demand grids 54 to 56.

The private power generators 54b to 56b may not be provided in the small-scale supply and demand grids 54 to 56, respectively. In such a case, electric power is supplied from the power generators 52b and 53b of the medium-scale supply and demand grids 52 and 53 to the small-scale supply and demand grids 54 to 56 in accordance with demand.

For example, air conditioning or hot-water supply apparatuses 54c to 56c are used as the combustion devices of the small-scale supply and demand grids 54 to 56, respectively. For example, a private car is used as the transport devices 54d to 56d. For example, users having their private cars in a condominium feed DME to the cars as fuel from the tertiary bases 54a to 56c without having to go to a gas station. As the scale is shifted from the medium-scale to the small-scale, the applications of the combustion devices and the transport devices are changed.

The plurality of energy supply and demand grids 51 to 57 are interconnected by electric power lines, such as power transmission lines and distribution lines, so as to enable interchange of the electric power. An existing infrastructure is used as these electric power lines. Furthermore, DME can be transported by trucks between the bases 51a to 56a so that the DME can be interchanged between the energy supply and demand grids 51 to 57.

A power generator using natural energy derived from sunlight, wind power, or hydraulic power may be provided in the energy supply and demand grids 51 to 57, and electric power generated from the power generator may be supplied to the energy supply and demand grids 51 to 57.

Furthermore, a power generator, a combustion device, or a transport device using fuel obtained from energy of biomass or waste may be provided in the energy supply and demand grids.

Information about the consumption of DME, the residual amount of DME in the storage tanks, and the amount of DME supplied to the storage tanks in the energy supply and demand grids 51 to 57, and information about the amount of power generation and the electric power consumption in the energy supply and demand grids are managed with a unified system using information lines (internet lines) such as existing telephone lines, optical cables, and electric power lines.

The information is transmitted to, for example, a computer of an energy center provided in the large-scale supply and demand grid 51. The computer manages the data using a unified system. For example, when surplus electric power is generated in an energy supply and demand grid, the computer performs control so that the surplus electric power is supplied to another energy supply and demand grid that is ready for power generation.

When surplus electric power of the large-scale supply and demand grid 51 is supplied to the medium-scale supply and demand grid 52 or 53, the DME consumption used for power generation in the medium-scale supply and demand grid 52 or 53 can be reduced. DME saved by this reduction is forwarded to the combustion device 52c or 53c or the transport device 52d or 53d, thereby effectively utilizing energy. In the case where the fuel for the power generator 52b or 53b is different from the fuel used in the combustion device 52c or 53c or the transport device 52d or 53d, even when surplus fuel is generated in the power generator 52b or 53b, the fuel cannot be effectively used as the fuel for the combustion device 52c or 53c or the transport device 52d or 53d.

Since the applications of the power generators 51b to 56b, the combustion devices 51c or 56c, and the transport devices 51d or 56d are changed between the large-, medium-, and small-scale supply and demand grids 51 to 56, the proportion of the DME consumption is also changed between these devices. According to the fuel supply system of the present embodiment, since the fuel for the power generators 51b to 56b, the combustion devices 51c or 56c, and the transport devices 51d or 56d is the same, energy can be effectively utilized even in the above case.

Since DME is used as common energy in the energy supply and demand grids 1 to 6, transport cost, and in addition, energy cost can be reduced compared with the case where different types of fuel such as fuel oil, propane gas, and natural gas are individually transported. When DME is used as fuel, CO₂ emission can be reduced compared with that from petroleum-based fuel.

The bases 51a to 56a that store DME and the power generators 51b to 56b that generate electric power using DME as fuel are provided in the energy supply and demand grids 51 to 56. The energy supply and demand grids 51 to 56 can work in a stand-alone manner, and thus electric power and energy can be supplied to the energy supply and demand grids 51 to 56 by the energy supply and demand grids 51 to 56 themselves. In the existing energy supply systems in which pipelines and electric power lines are used for connection, energy cannot be supplied in the case of the disconnection of the pipeline or the electric power lines in a disaster. In contrast, according to the energy supply system of the present embodiment, such a problem does not occur, and electric power required for operating the minimum electric power devices can be ensured. Even when the infrastructure of the energy supply and demand grids 51 to 56 is broken, energy can be supplied to the energy supply and demand grids when these energy supply and demand grids have recovered without waiting for the recovery of other energy supply and demand grids.

## Claims

1. A method for supplying energy comprising:
recovering a sensible heat of an exhaust gas of a power generator, a combustion device, or a transport device in a virtual area wherein a plurality of energy-consuming devices are provided, as H₂ or CO + H₂ by reforming dimethyl ether (DME) or methanol (CH₃OH), the virtual area being defined as "energy supply and demand grid; and
supplying the H₂ or CO + H₂ as fuel for the energy-consuming devices or as a chemical raw material within the energy supply and demand grid or to another energy supply and demand grid.

2. A method for supplying energy comprising:
providing a base that stores DME or CO + H₂ or H₂ obtained by reforming DME, a power generator that generates electric power using the DME as fuel or using the CO + H₂ or H₂ obtained by reforming DME as fuel, and a combustion device in an energy supply and demand grid;
supplying electric power generated in the power generator in the energy supply and demand grid to the energy supply and demand grid; and
supplying the DME or the CO + H₂ or H₂ obtained by reforming DME that is stored in the base in the energy supply and demand grid, as fuel for the power generator in the energy supply and demand grid and as fuel for at least one of the combustion device and a transport device in the energy supply and demand grid.

3. The method for supplying energy according to claim 1 or 2, wherein DME obtained from biomass, waste, petroleum residues, coal bed methane, or coal is supplied to the power generator, the combustion device, or the transport device in the energy supply and demand grid.

4. The method for supplying energy according to claim 1 or 2, wherein electric power generated in a power generator using natural energy derived from sunlight, wind power, or hydraulic power is supplied to the energy supply and demand grid.

5. The method for supplying energy according to claim 1 or 2, wherein a plurality of energy supply and demand grids are interconnected by electric power lines so as to enable interchange of electric power.

6. The method for supplying energy according to claim 1 or 2, wherein energy recovered as CO + H₂ or H₂ in the energy supply and demand grid is continuously supplied by means of a plurality of energy supply and demand grids interconnected with pipelines so as to be capable of interchanging the energy with other energy supply and demand grids.

7. The method for supplying energy according to claim 1 or 2, wherein a supply stand or station is provided inside or outside the energy supply and demand grid to enable supply of the transport device with the energy recovered as CO + H₂ or H₂ in the energy supply and demand grid or DME in a batch so that the energy or DME can be used in the transport device.

8. An energy supply system, wherein
waste heat of a power generator, a combustion furnace, a combustion device, or a transport device that is provided in an energy supply and demand grid is subjected to energy conversion to enable supply of the converted energy to energy-consuming devices in the energy supply and demand grid or another energy supply and demand grid;
the sensible heat of an exhaust gas of the power generator, the combustion device, or the transport device in the energy supply and demand grid is recovered as CO + H₂ or H₂ by reforming dimethyl ether (DME) or methanol (CH₃OH); and
the CO + H₂ or H₂ is supplied as fuel for the energy-consuming devices or as a chemical raw material within the energy supply and demand grid or to another energy supply and demand grid.

9. An energy supply system, wherein
a base that stores DME or CO + H₂ or H₂ obtained by reforming DME, a power generator that generates electric power using the DME as fuel or using the CO + H₂ or H₂ obtained by reforming DME as fuel, and at least one of a combustion device and a transport device are provided in an energy supply and demand grid;
electric power generated in the power generator in the energy supply and demand grid is supplied to the energy supply and demand grid; and
the DME or the CO + H₂ or H₂ obtained by reforming DME that is stored in the base in the energy supply and demand grid is supplied as fuel for the power generator in the energy supply and demand grid and as fuel for at least one of the combustion device and the transport device in the energy supply and demand grid.
